# EUROPEAN PATENT SPECIFICATION

(11) **EP 2 004 478 B1**
(45) Date of publication and mention of the grant of the patent: **27.06.2012**
(21) Application number: 07705334.6
(22) Date of filing: 09.03.2007
(51) Int. Cl.: B62K 21/12, B62K 23/06

(54) **BICYCLE HANDLEBAR**
FAHRRADLENKER
GUIDON DE BICYCLETTES

(30) Priority: 10.03.2006 GB 0604810; 12.06.2006 GB 0611588
(43) Date of publication of application: 24.12.2008
(73) Proprietor: ULTIMATE SPORTS ENGINEERING LIMITED, Industrial Estate Petworth, West Sussex GU28 9NN (GB)
(72) Inventor: BARNES, Graham, Surrey RH7 6QT (GB); SPARROW, Roger, Lionel, West Sussex GU28 9NN (GB)
(74) Representative: Samuels, Adrian James
(86) International application number: PCT/GB2007/000830
(87) International publication number: WO 2007/104943

(56) References cited:
- WO-A-2005/021366
- DE-A1- 4 339 980
- DE-U1- 29 603 807
- GB-A- 1 198 585
- JP-A- 2003 182 680
- US-A- 4 873 886
- US-A- 5 033 325
- US-A- 5 123 296
- US-A1- 2002 020 246

## Description

This invention relates to certain improvements in bicycles, in particular, the reduction of aerodynamic drag for bicycles which are intended for competitive use.

Cycle races and time-trials are highly competitive. Particularly in the case of races and time-trials run over longer distances, an important factor that can affect the performance of a rider is the amount of aerodynamic drag which the rider and bike present. Clearly the lower the drag, the greater the speed which can be achieved for a given expenditure of energy. To give an example of this, US 4,750,754 discloses a modification to conventional racing handlebars to provide a pair of forwardly and inwardly extending handles which a rider can grip with his or her forearms resting on the conventional cross-piece portion. This causes the rider to adopt a position which presents a forward facing shape that minimises the drag created.

However, the Applicant has further appreciated that the brake operating levers and supports therefor which are provided on the handlebars have an appreciable effect on the overall aerodynamic drag of the bicycle. It has further appreciated that this drag can be reduced by repositioning and/or reconfiguring the brake operating components.

US 5,033,325 discloses the features recited in the preamble to claim 1 and 10.

When viewed from a first aspect the present invention provides a handlebar for attachment to a cycle, the handlebar comprising a generally horizontally extending cross-piece portion and at least one brake operating lever disposed at least partially within the forward horizontal projection of said cross-piece portion, wherein the brake lever has a cross-sectional profile which has a width greater than its height, characterised in that the lever has a cross-sectional profile which is generally curved with a leading edge blunter than its trailing edge.

Thus it will be seen by those skilled in the art that in accordance with the invention a brake lever is located on the handlebar so as at least partially to mask the cross-piece of the handlebar. This represents a significant reduction in the aggregate frontal area presented by the handlebar as compared to conventional arrangements which have both the brake lever and mounting hood located in the full contact air stream. It has been found for example that in accordance with preferred embodiments of the invention a reduction in drag equivalent to about 10 to 15 watts can be achieved at a speed of approximately 27 miles per hour which gives a time saving of the order of 1 to 1.5 seconds per mile. It will be appreciated that this would be extremely significant at the upper levels of competitive cycling.

In discussing the invention reference will be made for the sake of convenience to a single brake lever although it will be appreciated that in most normal applications two brake levers would be provided on opposite sides of the handlebar for operating the front and rear brakes respectively. It is generally preferred that the two brake levers are configured in the same way although this is not strictly essential. It should be appreciated that as used herein horizontal is intended to mean horizontal when the bicycle is on level ground.

The longitudinal axis of the brake lever could be skewed relative to the longitudinal axis of the cross-piece. Depending upon the skew angle, the length and thickness of the brake lever and the vertical height of the cross-piece, this could result in part of the brake lever extending above or below the horizontal forward projection of the cross-piece. In preferred embodiments however the longitudinal axes of the brake lever and cross-piece are substantially parallel. Similarly, even if they are parallel part of the brake lever could extend beyond the horizontal forward projection of the cross-piece. For example, other constructional, ergonomic or safety factors might mean that the lever is not fully within the shadow of the cross-piece. However, such arrangements will still derive advantage from their application of the principle of the invention although since in general the degree of advantage obtainable would be dependent upon the extent of overlap, in the most preferred embodiments the brake lever is entirely within the horizontal forward projection of the cross-piece.

The Applicant has further found that the shape of the brake lever can have an impact on its aerodynamic performance. The brake lever has a cross-sectional profile which has a width, defined as its dimension in a direction normal to both its longitudinal axis and its pivot axis, greater than its height, defined as its dimension in the direction parallel to its pivot axis. Preferably the width is at least twice the height e.g. between two and three times the height. However it could be more than three times the height.

Such a brake lever is believed to be novel and inventive in its own right and thus when viewed from a second aspect the invention provides a brake operating lever for attachment to a bicycle, said brake operating lever having a longitudinal handle portion extending from a pivot axis, the handle portion having a width greater than its height, characterised in that the lever has a cross-sectional profile which is generally curved with a leading edge blunter than its trailing edge. The invention also extends to such a lever mounted for pivotal movement to a mounting hood and to a handlebar having such a brake operating lever mounted thereto. As above, the width is preferably at least twice e.g. between two and three times the height of the lever although could be more.

The lever has a cross-sectional profile which is generally curved and has its leading edge blunter than its trailing edge, i.e. it has a general aerofoil shape. In some embodiments envisaged the profile could be asymmetric - e.g. with a convex upper surface and a concave lower surface akin to the general shape of a lifting aerofoil. In preferred embodiments however the profile is symmetric between upper and lower parts.

In some preferred embodiments in accordance with either of the aforementioned aspects of the invention, the distal end of the lever is provided with a finial portion which may be formed integrally with it or attached thereto. Preferably the finial portion also has a shape including an aerofoil cross-section in order to minimise its wind resistance. A finial portion might be useful for example to reduce the risk of a rider's hands slipping off the lever or as a safety measure to avoid having a sharp end at the edge of the lever.

It is similarly preferred that, where provided, the brake lever hood inside which the lever is pivotally mounted and typically attached to a brake cable, also has a width greater than its height, more preferably shaped to include an aerofoil shaped cross-sectional profile, i.e. one which is blunter at its leading edge than its trailing edge. Again this encourages a smooth flow of air over it.

The overall shape of the hood could be a surface of revolution of the aforementioned sectional profile, a different reducing extrusion of the profile a linear extrusion of the profile, or indeed any other suitable shape.

The brake hood is preferably mounted at the outermost end of the cross-piece with the brake lever extending therefrom towards the centre of the handlebar. However, the lever hood could instead by disposed inboard of this location, extending either inwardly or outwardly. Indeed, it is even envisaged that the brake hood could be omitted and the brake lever mounted directly into the cross-piece itself, again extending inwardly or outwardly.

The brake cable could, as is conventional, be clipped to the outer surface of the handlebar and extend in use to the corresponding brake mechanism at the wheel. However, it is preferred that the cable passes inside the cross-piece or other handlebar tubing in order that it is, in preferred embodiments at least, completely concealed at least for its run along the handlebars. This beneficially further assists in minimising wind resistance and at the same time is more aesthetically pleasing.

Whilst horizontally extending brake levers are known for example on mountain bikes, as far as the Applicant is aware they have not previously be proposed in bicycles for competitive racing and time-trials which always have vertically extending brake levers. As mentioned previously this is of special significance in applications where minimisation of wind resistance is important and in practice such bikes will usually have the forwardly extending handles of the type generally shown in US 4,750,754 and described hereinabove. Thus it is a preferred feature of the above-mentioned aspect of the invention that the bicycle comprises a pair of forwardly extending handles.

Certain preferred embodiments of the invention will now be described, by way of example only, with reference to the accompanying drawings in which:
Figure 1 is a perspective view of a handlebar arrangement in accordance with the invention;
Figure 2 is a similar view to Figure 1 but from below;
Figure 3 is an enlarged view of one of the brake levers of Figures 1 and 2;
Figure 4 is a horizontal section view through the components shown in Figure. 3;
Figure 5 is a section on the line A..A of Figure 3;
Figure 6 is a view similar to Figure 3 showing the lever finial omitted;
Figure 7 is a view similar to Figure 3 of a further embodiment of the invention;
Figures 8 to 10 are views similar to Figure 3 of further embodiments;

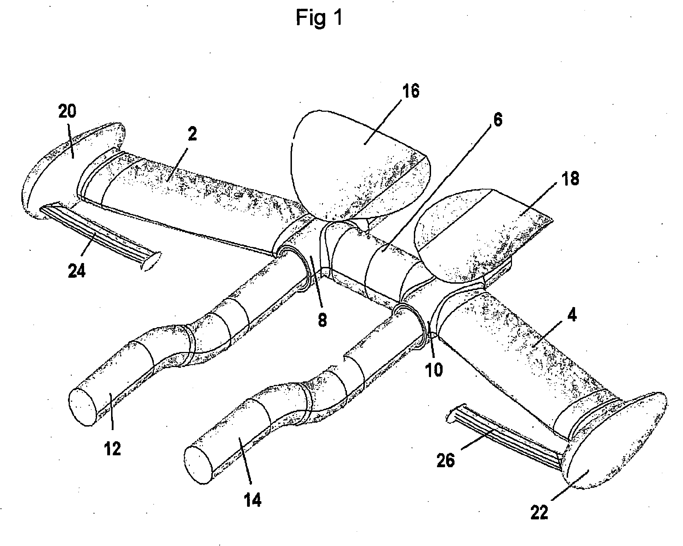

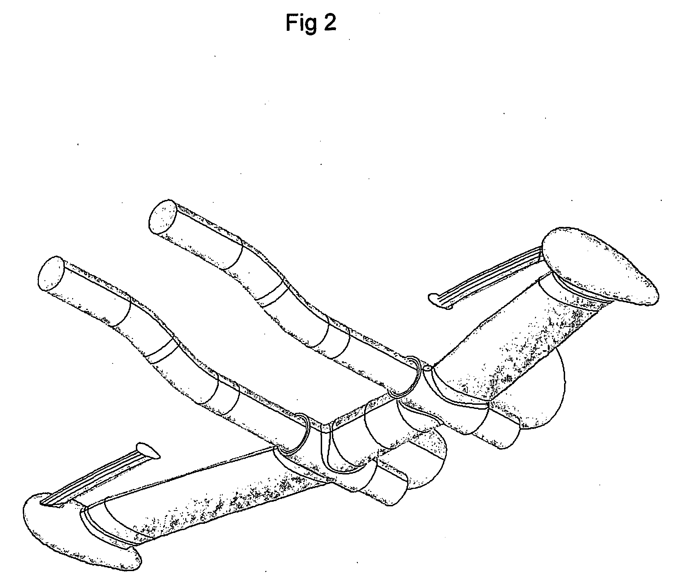

Figures 1 to 3 show a handlebar arrangement for a bicycle intended for competitive use such as racing or time-trials. It will in use be attached to a bicycle stem by means of a stem clamp in a conventional manner. The handlebars comprise a main cross-piece comprising left and right handle portions 2,4 and a central connecting portion 6. It is the central connecting portion 6 which is clamped by the stem clamp in use. At the junctions between the respective cross-piece handle portions 2,4 and the central connecting portion 6 are a pair of circular bores 8,10 which receive respective forwardly projecting handles 12,14. Mounted to the top of the tubular bores 8,10 and set backwardly therefrom are two forearm rests 16,18 on which a rider can rest his or her forearms whilst gripping the forwardly projecting handles 12,14.

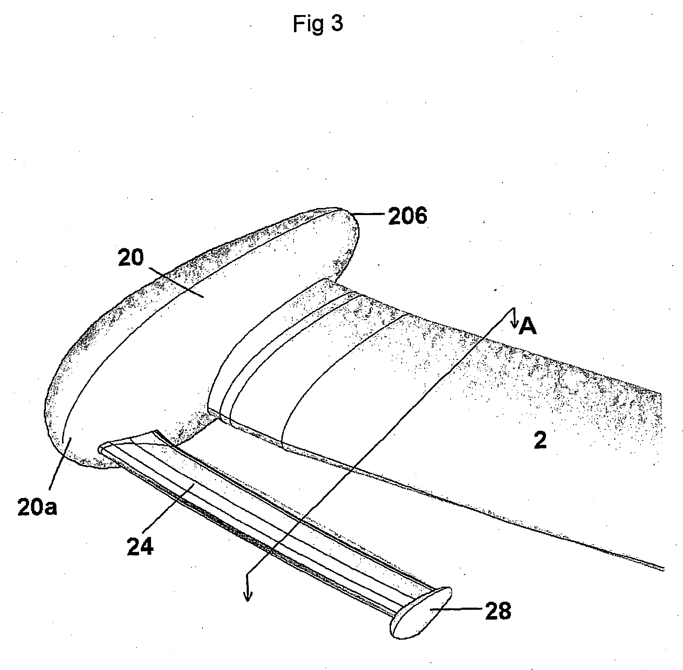

At the outer end of each of the side handles 2,4 are respective brake hoods 20,22 from which brake levers 24,26 extend. Referring to the enlarged view of Figure 3, it may be seen that the brake hood 20 is the shape of a generally aerofoil-shaped sectional profile which has been revolved around its long axis. Thus the leading surface 20a is of blunter shape than its trailing surface 20b. This overall shape helps to minimise wind resistance. A finial portion 28 is provided at the end of the lever 24 which can help, *inter alia*, with preventing a rider's hand from slipping off the lever. The shape of the finial portion 28 matches that of the brake hood 20.

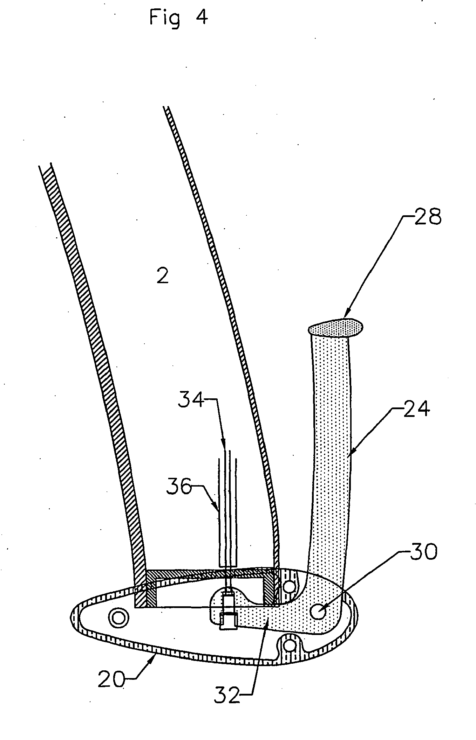

Functioning of the brake operation lever 24 may be seen from Figure 4. The lever 24 is part of a bell crank arrangement with arms of unequal length. The lever 24 is pivoted about a pivot axis 30 inside the brake hood 20 and extends approximately towards the centre of the handlebar. In other words the pivot axis 30 of the lever is outboard of its free-moving end 28. When the lever 24 is squeezed towards the cross-piece member 2, corresponding movement of the shorter arm of the lever 32 pulls on the brake cable 34 relative to its sleeve 36 which in turn compresses a pair of brake callipers in the conventional way. The brake cable 34,36 runs inside the hollow cross-piece member 2 and thus does not contribute to drag.

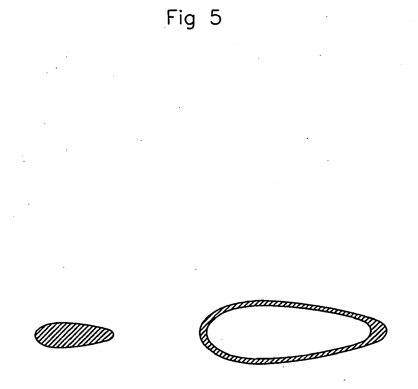

As may be seen from Figure 3 and particularly the cross-section of Figure 5, the profile of the exposed part of the lever 24 is flattened - i.e. its horizontal width in the plane of movement is greater than its vertical height, parallel to its plane of movement. Indeed, the width is three times the maximum height in this embodiment. As may be more fully appreciated from Figure 4, the brake lever 24 is located fully within the forward horizontal projection of the cross-piece member 2 which is defined as the area between the upper and lower delimitations indicated by dashed lines 38. This means that the brake lever 24 does not increase the frontal area presented by the handlebars beyond that which is inevitable from the cross-piece member 2. It should be further appreciated that the shape of the brake lever 24 in conjunction with its spacing from the cross-piece member 2 means that the airflow over the top and bottom surfaces respectively rejoins in the stagnation zone of the cross-piece member 2 i.e. at the point where the airflow divides to pass under or over the cross-piece member 2. This minimises turbulence and therefore drag.

In normal use the rider will spend most of his or her time holding the forwardly projecting handlebars 12,14 so as to minimise the frontal area the rider presents. This will mean that the brake assembly 20,24 is in the full air stream passing over the handlebars and therefore the reduction of wind resistance achieved by the shape and configuration of the brake lever 24 relative to the cross-piece member 2 can result in a significant power advantage at a given speed, for example 10 to 15 watts at 27 miles per hour which equates to approximately 1 second per mile. Should the rider need to apply the brakes, he or she will place their hands on the cross-piece member 2 just inwardly of, or partly covering, the brake hood 20 and curl their fingers over the brake lever 24 and squeeze towards the cross-piece member 2 which operates the brake callipers as described in relation to Figure 4.

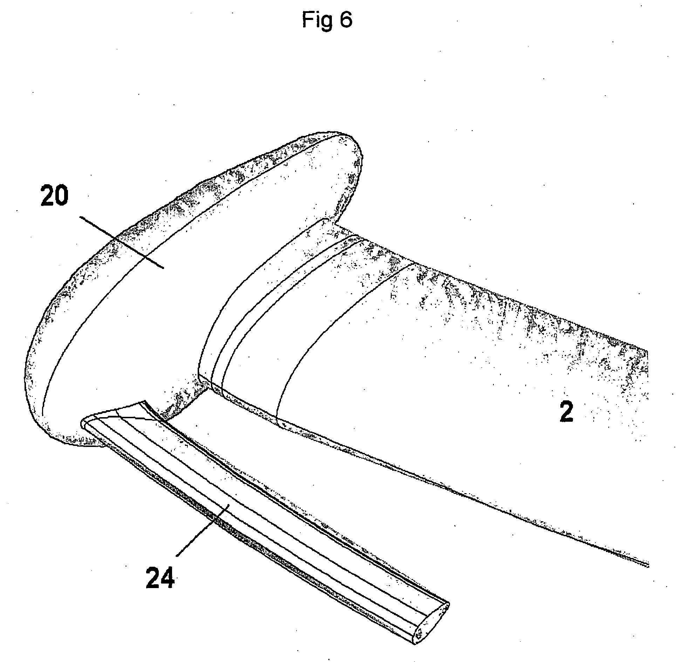

A second embodiment of the invention is shown in Figure 6. This is identical to the first embodiment except that the brake lever 24 is not provided with a finial portion. This might marginally decrease the wind resistance further although in some circumstances other considerations might outweigh this.

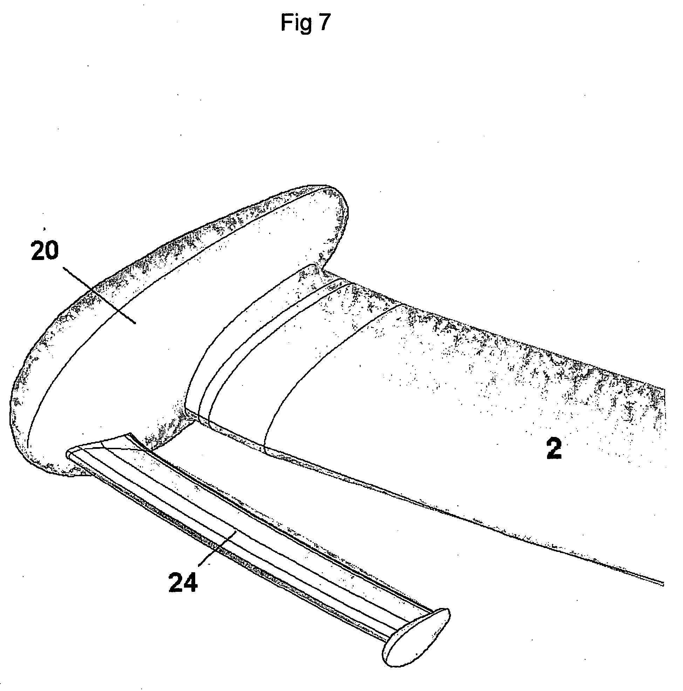

Figure 7 shows another embodiment which has a rectangular section lever 24'. Although the lever itself may not have quite the minimised wind resistance of the previous embodiments, since it is still located within the forward horizontal projection of the cross-piece member 2, a significant advantage over prior art arrangements is still enjoyed. A finial portion 28 is provided in the drawing shown although, as before, this could omitted.

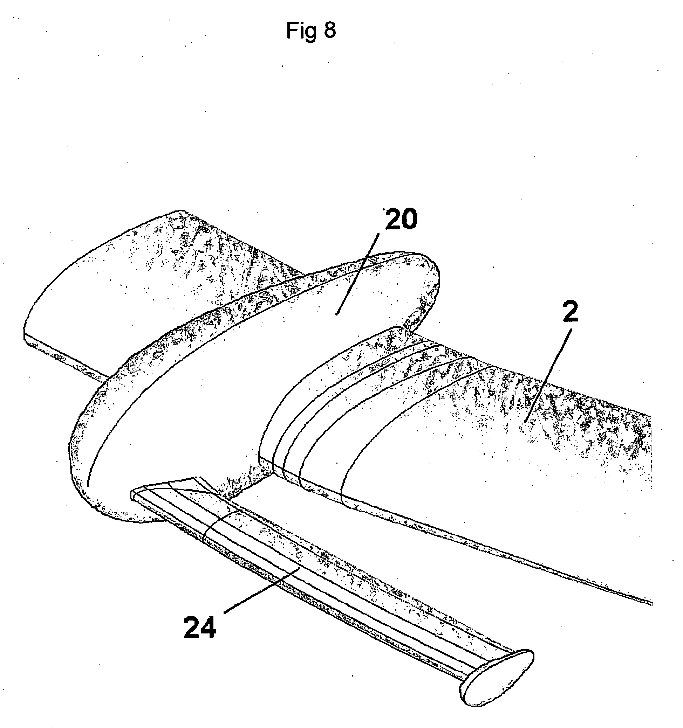

Figures 8 to 10 show further embodiments of the invention which demonstrate some further possible variants on the first embodiment which have been envisaged.
Figure 8 shows the lever hood 20 mounted inboard from the outer end of the cross-piece 2. In all other respects the embodiment is the same as the first. This enjoys all the advantages of the first embodiment.

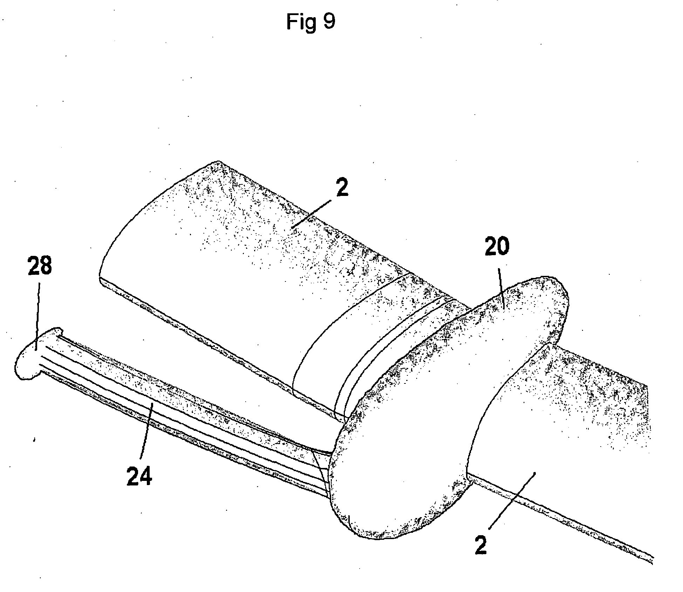

Figure 9 also shows the lever hood 20 mounted inboard from the outer end of the cross-piece 2. However in this embodiment the lever 24 extends outwardly, away from the centre of the cross-piece 2.

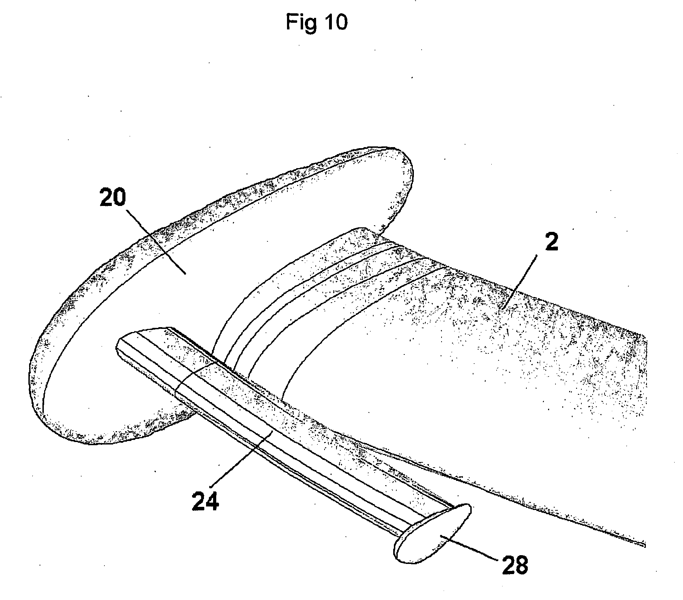

Finally, figure 10 shows the brake hood 20 disposed at the end of the cross-piece 2 as in the first embodiment; but this time the lever 24 extends horizontally from the brake hood 20 vertically offset from the plane of the cross-piece. Thus in this embodiment the lever 24 is not within the forward horizontal projection of the cross-piece. However the drop-shaped sectional profile of the lever 24 and the drop shape of the brake hood 20 still both contribute to a substantial reduction in drag as compared to known arrangements.

It will be appreciated by those skilled in the art that the foregoing description is merely exemplary of how the principles of the invention may be applied and that many further modifications and variations will be apparent without departing from the scope of the invention. For example, in the embodiments shown the brake lever is mounted horizontally although this is not essential. Thus, the lever need not be horizontal. This may be because the cross-piece is not horizontal (the brake lever still being parallel to it) or it could means that the lever is not parallel to the cross-piece member, whilst still realising some or all of the advantages of the invention.

## Claims

1. A handlebar for attachment to a cycle, the handlebar comprising a generally horizontally extending cross-piece portion and at least one brake operating lever disposed at least partially within the forward horizontal projection of said cross-piece portion, wherein the brake lever has a cross-sectional profile which has a width greater than its height, **characterised in that** the lever has a cross-sectional profile which is generally curved with a leading edge blunter than its trailing edge.

2. A handlebar as claimed in claim 1 wherein the longitudinal axes of the brake lever and cross-piece are substantially parallel.

3. A handlebar as claimed in claim 1 or 2 wherein said brake lever is entirely within the horizontal forward projection of the cross-piece.

4. A handlebar as claimed in claim 1, 2 or 3 wherein the width is between two and three times the vertical height.

5. A handlebar as claimed in any preceding claim wherein said brake lever comprises a finial portion at the distal end thereof, said finial portion being generally curved with a leading edge blunter than its trailing edge.

6. A handlebar as claimed in any preceding claim wherein said brake operating lever is mounted for pivotal movement about a pivot axis which is outboard of the free end of the lever.

7. A handlebar as claimed in any preceding claim wherein said brake lever is pivotally mounted inside a brake lever hood, said brake lever hood having a cross-sectional profile which has a width greater than its height.

8. A handlebar as claimed in claim 7 wherein said brake lever hood has a cross-sectional profile which is generally curved and which is blunter at its leading edge than its trailing edge.

9. A handlebar as claimed in any of claims 1 to 6 wherein the brake lever is mounted directly into the cross-piece.

10. A brake operating lever for attachment to a bicycle, said brake operating lever having a longitudinal handle portion extending from a pivot axis, the handle portion having a width greater than its height, **characterised in that** the lever has a cross-sectional profile which is generally curved with a leading edge blunter than its trailing edge.

11. A brake operating lever as claimed in claim 10 mounted for pivotal movement to a brake hood.

12. A handlebar having a brake operating lever as claimed in claim 10 mounted thereto.

13. A brake lever or handlebar as claimed in claim 10, 11 or 12 wherein the width of the lever is between two and three times the height of the lever.

## Patentansprüche

1. Lenker zum Anbringen an einem Zweirad, wobei der Lenker einen sich im Wesentlichen horizontal erstreckenden Querstück-Anteil und wenigstens einen Bremsbetätigungshebel umfasst, der wenigstens teilweise innerhalb des vorderen horizontalen Vorsprungs des Querstück-Anteils angeordnet ist, wobei der Bremshebel ein Querschnittsprofil aufweist, dessen Breite größer ist als seine Höhe, **dadurch gekennzeichnet, dass** der Hebel ein Querschnittsprofil aufweist, das im Allgemeinen gekrümmt ist, wobei eine Vorderkante stumpfer ist als seine Hinterkante.

2. Lenker nach Anspruch 1, wobei die longitudinalen Achsen des Bremshebels und des Querstücks im Wesentlichen parallel sind.

3. Lenker nach Anspruch 1 oder 2, wobei sich der Bremshebel vollständig innerhalb des horizontalen -Vorsprungs des Querstücks befindet.

4. Lenker nach Anspruch 1, 2 oder 3, wobei die Breite zwei bis drei Mal so groß ist wie die vertikale Höhe.

5. Lenker nach einem der vorhergehenden Ansprüche, wobei der Bremshebel an seinem entfernten Ende einen Endabschnitt umfasst und der Endabschnitt im Allgemeinen gekrümmt ist, wobei eine Vorderkante stumpfer ist als seine Hinterkante.

6. Lenker nach einem der vorhergehenden Ansprüche, wobei der Bremsbetätigungshebel für eine Drehbewegung um eine Drehachse montiert ist, die sich außerhalb des freien Endes des Hebels befindet.

7. Lenker nach einem der vorhergehenden Ansprüche, wobei der Bremshebel drehbar innerhalb einer Bremshebelhaube montiert ist, wobei die Bremshebelhaube ein Querschnittsprofil aufweist, dessen Breite größer ist als seine Höhe.

8. Lenker nach Anspruch 7, wobei die Bremshebelhaube ein Querschnittsprofil aufweist, das im Allgemeinen gekrümmt ist und das an seiner Vorderkante stumpfer ist als an seiner Hinterkante.

9. Lenker nach einem der Ansprüche 1 bis 6, wobei der Bremshebel direkt in das Querstück montiert ist.

10. Bremsbetätigungshebel zum Anbringen an einem zweirad, wobei der Bremsbetätigungshebel einen longitudinalen Griffanteil aufweist, der sich von einer Drehachse erstreckt, wobei der Griffanteil eine Breite aufweist, die größer als seine Höhe ist, **dadurch gekennzeichnet, dass** der Hebel ein Querschnittsprofil aufweist, das im Allgemeinen gekrümmt ist, wobei eine Vorderkante stumpfer ist als seine Hinterkante.

11. Bremsbetätigungshebel nach Anspruch 10, der für eine Drehbewegung an eine Bremshaube montiert ist.

12. Lenker mit einem Bremsbetätigungshebel nach Anspruch 10, der daran montiert ist.

13. Bremshebel oder Lenker nach Anspruch 10, 11 oder 12, wobei die Breite des Hebels zwei bis drei Mal so groß ist wie die Höhe des Hebels.

## Revendications

1. Guidon destiné à être fixé à une bicyclette, le guidon comportant une partie d'élément transversal s'étendant généralement horizontalement et au moins un levier d'actionnement de frein disposé au moins partiellement dans la saillie horizontale avant de ladite partie d'élément transversal, dans lequel le levier de frein a un profil transversal qui a une largeur supérieure à sa hauteur, **caractérisé en ce que** le levier a un profil transversal qui est généralement incurvé avec un bord avant plus émoussé que son bord arrière.

2. Guidon selon la revendication 1, dans lequel les axes longitudinaux du levier de frein et de l'élément transversal sont sensiblement parallèles.

3. Guidon selon la revendication 1 ou 2, dans lequel ledit levier de frein est entièrement compris dans la saillie avant horizontale de l'élément transversal.

4. Guidon selon la revendication 1, 2 ou 3, dans lequel la largeur est comprise entre deux et trois fois la hauteur verticale.

5. Guidon selon l'une quelconque des revendications précédentes, dans lequel ledit levier de frein comporte une partie finale au niveau de l'extrémité distale de celui-ci, ladite partie finale étant généralement incurvée avec un bord avant plus émoussé que son bord arrière.

6. Guidon selon l'une quelconque des revendications précédentes, dans lequel ledit levier d'actionnement de frein est monté pour un mouvement de pivotement autour d'un axe de pivotement lequel est à l'extérieur de l'extrémité libre du levier.

7. Guidon selon l'une quelconque des revendications précédentes, dans lequel ledit levier de frein est monté par pivotement à l'intérieur d'un protecteur de levier de frein, ledit protecteur de levier de frein ayant un profil transversal qui a une largeur supérieure à sa hauteur.

8. Guidon selon la revendication 7, dans lequel ledit protecteur de levier de frein a un profil transversal qui est généralement incurvé et qui est plus émoussé au niveau de son bord avant que de son bord arrière.

9. Guidon selon l'une quelconque des revendications 1 à 6, dans lequel le levier de frein est monté directement dans l'élément transversal.

10. Levier d'actionnement de frein destiné à être fixé à une bicyclette, ledit levier d'actionnement de frein ayant une partie de poignée longitudinale s'étendant depuis un axe de pivotement, la partie de poignée ayant une largeur supérieure à sa hauteur, **caractérisé en ce que** le levier a un profil transversal qui est généralement incurvé avec un bord avant plus émoussé que son bord arrière.

11. Levier d'actionnement de frein selon la revendication 10 monté en vue d'un mouvement de pivotement sur un protecteur de frein.

12. Guidon ayant un levier d'actionnement de frein comme revendiqué dans la revendication 10 monté sur celui-ci.

13. Levier de frein ou guidon selon la revendication 10, 11 ou 12, dans lequel la largeur du levier est comprise entre deux et trois fois la hauteur du levier.
